# EUROPEAN PATENT APPLICATION

(11) **EP 3 836 356 A1**
(43) Date of publication of application: **16.06.2021**
(21) Application number: 19882813.9
(22) Date of filing: 31.10.2019
(51) Int. Cl.: H02K 1/27

(54) **ROTATING ELECTRIC MACHINE ROTOR CORE**

(30) Priority: 09.11.2018 JP 2018211476
(71) Applicant: AISIN AW CO., LTD., Fujiicho Anjo-shi Aichi 444-1192 (JP); AISIN SEIKI KABUSHIKI KAISHA, Kariya-shi, Aichi 448-8650 (JP)
(72) Inventor: SUGIURA, Takayuki, Anjo-shi, Aichi 444-1192 (JP); NAGAE, Tokihito, Anjo-shi, Aichi 444-1192 (JP); TADA, Jumpei, Anjo-shi, Aichi 444-1192 (JP); TSUDA, Teppei, Kariya-shi, Aichi 448-8650 (JP)
(74) Representative: Kramer Barske Schmidtchen Patentanwälte PartG mbB
(86) International application number: PCT/JP2019/042863
(87) International publication number: WO 2020/095823

(57) **Abstract**

A rotating electrical machine rotor core is implemented that can suppress an increase in the number of manufacturing processes and that has a magnetic structure that can reduce noise or vibration associated with rotation. A rotating electrical machine rotor core (10) includes a member disposition hole (3) in which a permanent magnet (2) is disposed; and a pair of magnetic flux limiting holes (4) disposed on both sides in a circumferential direction (C) of each of magnetic poles (P), units in which the member disposition hole (3) is repeatedly made in the circumferential direction (C) being the magnetic poles (P). Each magnetic plate (1) includes a plurality of types of through part pairs (5) having different circumferential spacings (CP) between a pair of limiting-hole through parts (41) that makes the pair of magnetic flux limiting holes (4). Types of through part pairs (5) adjacent to each other in the circumferential direction (C) differ from each other. A plurality of magnetic plates (1) are stacked on top of each other such that the member disposition holes (3) continue all the way in an axial direction L and that the plurality of magnetic plates (1) have a plurality of axial regions (LR) having different phases in the circumferential direction (C) of the magnetic plates (1).

## Description

### TECHNICAL FIELD

The present invention relates to a rotating electrical machine rotor core formed by stacking a plurality of magnetic plates which are plate-like magnetic materials on top of each other.

### BACKGROUND ART

In a permanent magnet rotating electrical machine having permanent magnets in a rotor, torque ripple or cogging torque occurs due to magnetic saliency of the rotor. They cause noise or vibration and thus a variety of techniques to reduce NV (noise/vibration) are attempted. For example, JP 2011-223742 A discloses a rotor step-skew structure in which a rotor core is divided into a plurality of sections in an axial direction of a rotor to dispose permanent magnets such that the locations of the permanent magnets are staggered every section, by which the circumferential locations of the center of magnetic poles differ from each other according to axial locations. In addition, US 2018/0175681 A discloses a rotor having a pseudo step-skew structure in which in sections divided in an axial direction of a rotor, the locations of permanent magnets are common but the shapes of magnetic flux limiting holes (flux barriers) are made different from each other.

### CITATIONS LIST

### PATENT LITERATURE

Patent Literature 1: JP 2011-223742 A
Patent Literature 2: US 2018/0175681 A

### SUMMARY OF INVENTION

### TECHNICAL PROBLEMS

In the rotor step-skew structure, there is a need to divide a permanent magnet in the axial direction and dispose the permanent magnets in the rotor core. Hence, the number of parts increases and the number of processes upon assembling a rotor also increases. In the pseudo step-skew structure, there is a need to stack a plurality of types of magnetic plates with different shapes of flux barriers on top of each other. In general, upon manufacturing a rotor core, magnetic plates are cut out and the cut-out magnetic plates are sequentially stacked on top of each other. When a plurality of types of magnetic plates are stacked on top of each other, a plurality of types of dies are required, and since stacking can only be performed section by section, the number of rotor core manufacturing processes increases.

In view of the above description, it is desired to implement a rotating electrical machine rotor core that can suppress an increase in the number of manufacturing processes and that has a magnetic structure that can reduce noise or vibration associated with rotation.

### SOLUTIONS TO PROBLEMS

In one aspect, a rotating electrical machine rotor core that considers the above description and that is formed by stacking a plurality of magnetic plates on top of each other, the magnetic plates being plate-like magnetic materials, includes: a member disposition hole in which a permanent magnet is disposed, the permanent magnet being a source for generating magnetic force for rotating a rotor according to a rotating magnetic field from a stator; and a pair of magnetic flux limiting holes disposed for each of magnetic poles so as to be disposed on both sides in a circumferential direction of the magnetic pole and to extend toward a radially outer side from a location closest to the member disposition hole, units in which the member disposition hole is repeatedly made in a circumferential direction being the magnetic poles, and in each of the magnetic plates, through parts of the magnetic plate that make the magnetic flux limiting holes are limiting-hole through parts, and a pair of the limiting-hole through parts that makes a pair of the magnetic flux limiting holes provided for each of the magnetic poles is a through part pair, each of the magnetic plates includes a plurality of types of the through part pairs having different circumferential spacings between a pair of the limiting-hole through parts, and types of the through part pairs adjacent to each other in a circumferential direction differ from each other, and the plurality of magnetic plates are stacked on top of each other such that the member disposition holes for each of the magnetic poles continue all a way in an axial direction and that the plurality of magnetic plates have a plurality of axial regions having different phases in a circumferential direction of the magnetic plates.

According to this configuration, by stacking magnetic plates on top of each other such that their phases differ from each other, i.e., by performing rotational stacking, a rotating electrical machine rotor core can be implemented that has a pseudo step-skew structure in which in axial regions divided in an axial direction of a rotor, the locations of permanent magnets are common but the locations of magnetic flux limiting holes differ from each other. Since the magnetic plates can be of one type, an increase in the number of manufacturing apparatuses such as dies can be prevented. In addition, since formation of magnetic plates and stacking of the magnetic plates can be performed in continuous processes, an increase in the number of manufacturing processes is also suppressed. As such, according to this configuration, a rotating electrical machine rotor core can be implemented that can suppress an increase in the number of manufacturing processes and that has a magnetic structure that can reduce noise or vibration associated with rotation.

In addition, in one aspect, a rotating electrical machine rotor core that considers the above description and that is formed by stacking a plurality of magnetic plates on top of each other, the magnetic plates being plate-like magnetic materials, includes: a member disposition hole in which a permanent magnet is disposed, the permanent magnet being a source for generating magnetic force for rotating a rotor according to a rotating magnetic field from a stator; and a pair of magnetic flux limiting holes disposed for each of magnetic poles so as to be disposed on both sides in a circumferential direction of the magnetic pole and to extend toward a radially outer side from a location closest to the member disposition hole, units in which the member disposition hole is repeatedly made in a circumferential direction being the magnetic poles, and in each of the magnetic plates, through parts of the magnetic plate that make the magnetic flux limiting holes are limiting-hole through parts, and a pair of the limiting-hole through parts that makes a pair of the magnetic flux limiting holes provided for each of the magnetic poles is a through part pair, each of the magnetic plates includes a plurality of types of the through part pairs having different circumferential spacings between a pair of the limiting-hole through parts, and types of the through part pairs adjacent to each other in a circumferential direction differ from each other, and the plurality of magnetic plates may be stacked on top of each other such that the member disposition holes for each of the magnetic poles continue all a way in an axial direction and that the plurality of magnetic plates have a plurality of axial regions having different phases in a circumferential direction of the magnetic plates every disposition pitch in a circumferential direction of the magnetic pole.

According to this configuration, by stacking magnetic plates on top of each other such that their phases differ from each other every disposition pitch in a circumferential direction of a magnetic pole, i.e., by performing rotational stacking every disposition pitch in the circumferential direction of the magnetic pole, a rotating electrical machine rotor core can be implemented that has a pseudo step-skew structure in which in axial regions divided in an axial direction of a rotor, the locations of permanent magnets are common but the locations of magnetic flux limiting holes differ from each other. Since the magnetic plates can be of one type, an increase in the number of manufacturing apparatuses such as dies can be prevented. In addition, since formation of magnetic plates and stacking of the magnetic plates can be performed in continuous processes, an increase in the number of manufacturing processes is also suppressed. As such, according to this configuration, a rotating electrical machine rotor core can be implemented that can suppress an increase in the number of manufacturing processes and that has a magnetic structure that can reduce noise or vibration associated with rotation.

Further features and advantages of the rotating electrical machine rotor core will become apparent by the following description of embodiments which will be described with reference to drawings.

### BRIEF DESCRIPTION OF DRAWINGS

FIG. 1 is a see-through perspective view showing an example of a rotor core.
FIG. 2 is an axially-viewed plan view showing an example of a rotor.
FIG. 3 is a plan view showing an example of a magnetic plate.
FIG. 4 is an axially-viewed partial plan view showing another example of a rotor.
FIG. 5 is an axially-viewed partial plan view showing another example of a rotor.

### DESCRIPTION OF EMBODIMENTS

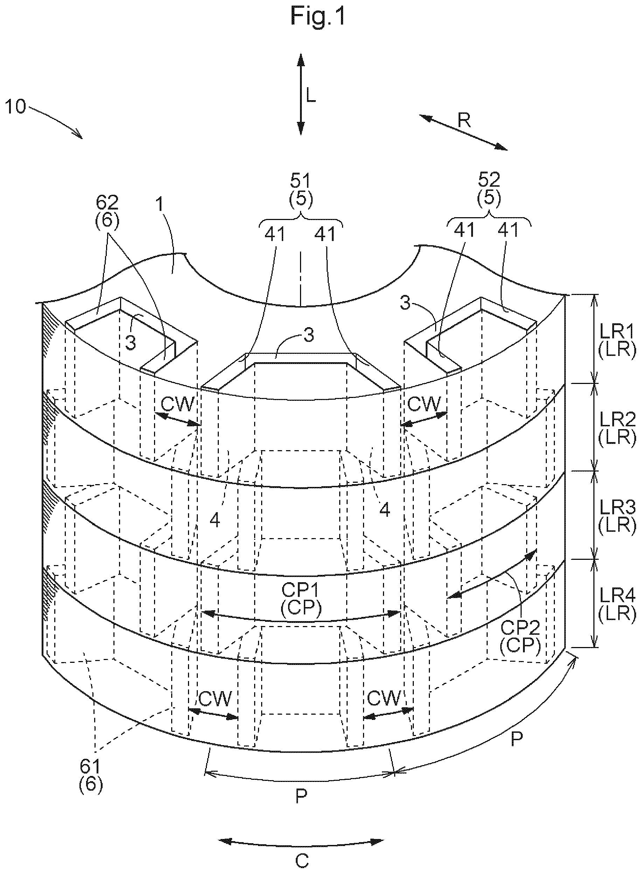

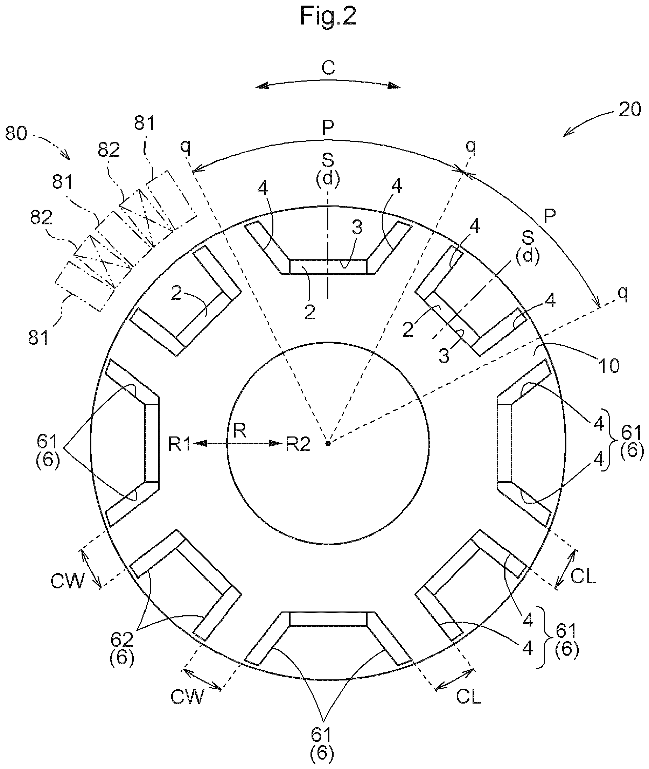

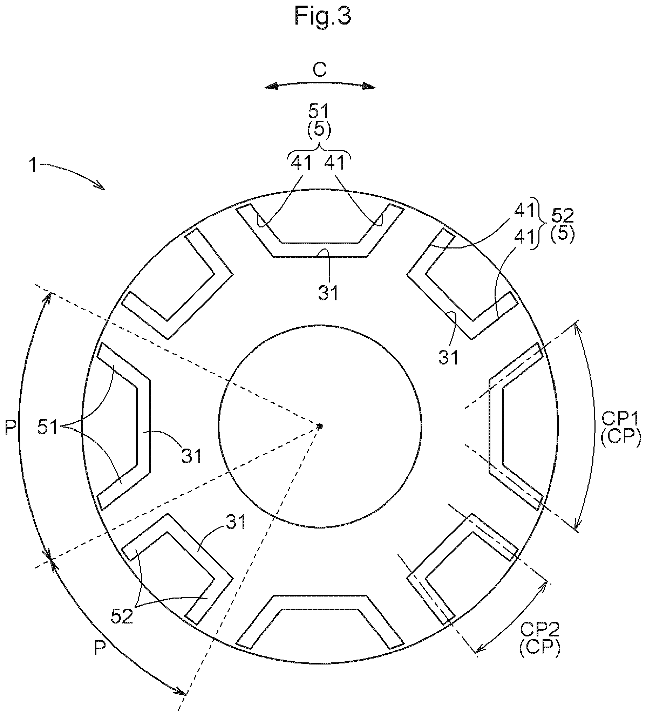

Using a rotor core of a buried magnet rotating electrical machine as an example, an embodiment of a rotating electrical machine rotor core will be described below based on the drawings. FIG. 1 is a see-through perspective view showing an example of a rotor core 10 (rotating electrical machine rotor core), FIG. 2 is an axially-viewed plan view showing an example of a rotor 20 using the rotor core 10, and FIG. 3 is a plan view showing an example of a magnetic plate 1 included in the rotor core 10.

As shown in FIG. 2, in the rotor 20 of the present embodiment, one magnetic pole P is formed by one permanent magnet 2, and the rotor 20 includes eight magnetic poles P. The permanent magnet 2 is a magnetic force generating member serving as a source for generating magnetic force for rotating the rotor according to a rotating magnetic field from a stator 80. A member disposition hole 3 is a hole in which a permanent magnet 2 which is a magnetic force generating member is disposed. As shown in FIG. 1, in the rotor core 10, the member disposition holes 3 are made so as to continue in an axial direction L. Thus, one permanent magnet 2 having a length roughly corresponding to a length in the axial direction L can be disposed in member disposition holes 3. However, the configuration is not limited thereto, and a plurality of permanent magnets 2 divided in the axial direction L may be disposed in one member disposition hole 3. The magnetic poles P are also units in which the member disposition hole 3 is repeatedly made in a circumferential direction C (circumferential repetition units).

As shown in FIG. 2, a pair of magnetic flux limiting holes 4 is disposed on both sides in the circumferential direction C of each magnetic pole P. Each magnetic flux limiting hole 4 is disposed for each magnetic pole P so as to extend toward a radially outer side R1 from a location closest to a member disposition hole 3. The following description is made referring a pair of magnetic flux limiting holes 4 disposed for each magnetic pole P as a limiting hole pair 6 as appropriate.

The rotor core 10 is formed by stacking a plurality of magnetic plates 1 which are plate-like magnetic materials on top of each other. As shown in FIG. 3, in each magnetic plate 1 there are made a disposition-hole through part 31 which is a through part that makes a member disposition hole 3 when the magnetic plate 1 is stacked; and limiting-hole through parts 41 which are through parts that make magnetic flux limiting holes 4 when the magnetic plate 1 is stacked. As described above, the magnetic flux limiting holes 4 are disposed as a limiting hole pair 6 on both sides in the circumferential direction C of each magnetic pole P. Thus, the limiting-hole through parts 41 are also made as a limiting-hole through part pair 5 (through part pair) on both sides in the circumferential direction C of each magnetic pole P, so as to correspond to a limiting hole pair 6 for the magnetic pole P.

As shown in FIG. 3, each magnetic plate 1 includes a plurality of types of limiting-hole through part pairs 5 having different spacings in the circumferential direction C (circumferential spacings CP) between a pair of limiting-hole through parts 41. FIG. 3 exemplifies a mode in which there are two types of limiting-hole through part pairs 5: a first limiting-hole through part pair 51 and a second limiting-hole through part pair 52. In addition, the limiting-hole through part pairs 5 are made such that the types of limiting-hole through part pairs 5 adjacent to each other in the circumferential direction C differ from each other.

In the mode exemplified in FIG. 3, each magnetic plate 1 includes two types of limiting-hole through part pairs: a first limiting-hole through part pair 51 in which a circumferential spacing CP between a pair of limiting-hole through parts 41 that makes a limiting-hole through part pair 5 is a first spacing CP1; and a second limiting-hole through part pair 52 in which a circumferential spacing CP between a pair of limiting-hole through parts 41 that makes a limiting-hole through part pair 5 is a second spacing CP2 shorter than the first spacing CP1. In addition, the first limiting-hole through part pairs 51 and the second limiting-hole through part pairs 52 are alternately disposed in the circumferential direction C.

Since the polarities of magnetic force for rotating the rotor 20 are of two types, S polarity and N polarity, the number of magnetic poles P is a multiple of 2. As in the present embodiment, when two types of limiting-hole through part pairs 5 (the first limiting-hole through part pairs 51 and the second limiting-hole through part pairs 52) are alternately disposed in the circumferential direction C, different types of limiting-hole through part pairs 5 can be appropriately disposed without limiting-hole through part pairs 5 of the same type being adjacent to each other. Needless to say, the types of limiting-hole through part pairs 5 are not limited to two types and may be three or more types.

As shown in FIG. 1, in the rotor core 10, the plurality of magnetic plates 1 are stacked on top of each other such that member disposition holes 3 for each magnetic pole P continue all the way in the axial direction L. That is, the rotor core 10 is formed by stacking the plurality of magnetic plates 1 on top of each other such that the disposition-hole through parts 31 overlap each other as viewed in the axial direction. In addition, the plurality of magnetic plates 1 are stacked on top of each other so that the rotor core 10 has a plurality of axial regions LR having different phases in the circumferential direction C of the magnetic plates 1. The plurality of magnetic plates 1 are stacked on top of each other such that the disposition-hole through parts 31 overlap each other as viewed in the axial direction, and thus are stacked on top of each other so that the rotor core 10 has the plurality of axial regions LR having different phases in the circumferential direction C of the magnetic plates 1 every disposition pitch in the circumferential direction C of the magnetic pole P. As shown in FIGS. 2 and 3, the magnetic poles P are disposed in the circumferential direction C at the same pitch. Namely, angles as viewed in the axial direction between the centers of magnetic poles adjacent to each other in the circumferential direction C (which will be described later with reference to FIG. 2) are uniform. FIG. 1 exemplifies a mode in which there are four axial regions LR: a first axial region LR1, a second axial region LR2, a third axial region LR3, and a fourth axial region LR4. Since there are two types of limiting-hole through part pairs 5, the first axial region LR1 and the third axial region LR3 have the same relative phase, and the second axial region LR2 and the fourth axial region LR4 have the same relative phase.

Note that since there are two types of limiting-hole through part pairs 5, there may be two axial regions LR. Namely, here, a mode is exemplified in which there are axial regions LR whose number is a multiple of "2" to support two types of limiting-hole through part pairs 5. When there are three types of limiting-hole through part pairs 5, it is preferred that the rotor core 10 have axial regions LR whose number is a multiple of "3", e.g., the rotor core 10 have three axial regions LR.

In the above description, with reference to FIG. 1, a mode is exemplified in which it is configured to include axial regions LR whose number is a multiple of "2" to support two types of limiting-hole through part pairs 5. However, the axial regions LR may be provided such that instead of the number of the axial regions LR, the lengths of the axial regions LR are uniform according to the types of the limiting-hole through part pairs 5. For example, though depiction is omitted, the configuration can be such that when there are four axial regions LR as in FIG. 1, a first axial region LR1 and a fourth axial region LR4 have the same relative phase, and a second axial region LR2 and a third axial region LR3 have the same relative phase. Note, however, that in this case, the second axial region LR2 and the third axial region LR3 can be considered a single continuous axial region LR. That is, in this case, it can be said that there are three axial regions LR in the axial direction L. For example, it can also be said that with four axially divided lengths of the rotor core 10 being "axial region reference lengths", two axial regions LR at both end portions in the axial direction L each have an axial region reference length, and an axial region LR at a central portion in the axial direction L has a length twice the axial region reference length.

Note that although in the above description a mode is exemplified in which the axial regions LR are provided such that the lengths of the axial regions LR are uniform according to the types of the limiting-hole through part pairs 5, the lengths do not need to be uniform. For example, in a case in which there are four axial regions LR as in FIG. 1, when a second axial region LR2 and a third axial region LR3 have the same relative phase and can be considered a single continuous axial region LR, the length in the axial direction L of a combination of the second axial region LR2 and the third axial region LR3, the length in the axial direction L of a first axial region LR1, and the length in the axial direction L of a fourth axial region LR4 may be uniform.

In many cases, the magnetic plates 1 are manufactured by cutting a steel sheet material using a die. Preferably, the rotor core 10 is formed by cutting magnetic plates 1 out of a steel sheet material and stacking the cut magnetic plates 1 on top of each other. As described above, since a single magnetic plate 1 has a plurality of types of limiting-hole through part pairs 5 made therein, by stacking identical magnetic plates 1 on top of each other such that their phases differ from each other, the rotor core 10 can be formed in which the magnetic flux limiting holes 4 are made at different locations in the axial direction L. That is, since the magnetic plates 1 are of one type, there is no increase in the number of manufacturing apparatuses such as dies. In addition, since formation of magnetic plates 1 and stacking of the magnetic plates 1 can be performed in continuous processes, an increase in the number of manufacturing processes is also suppressed.

Upon formation of the rotor core 10 by stacking the magnetic plates 1 on top of each other, in order to suppress an accumulated difference between the thicknesses of the magnetic plates 1, a rotational stacking method may be used in which the magnetic plates 1 are stacked on top of each other while periodically and circumferentially rotated. Upon stacking identical magnetic plates 1 on top of each other such that their phases differ from each other, such a rotational stacking method can be used, and thus, the rotor core 10 having a magnetic structure that can reduce noise or vibration associated with rotation can be implemented with almost no increase in the number of processes.

As shown in FIG. 2, a pair of magnetic flux limiting holes 4 provided for each magnetic pole P is disposed so as to be symmetric with respect to a reference plane S that passes through the center in the circumferential direction C of the magnetic pole P and extends in the radial direction R. As in the present embodiment, in a case of the rotor core 10 of a buried magnet rotating electrical machine, the center in the circumferential direction C of the magnetic pole P corresponds to a magnetic pole center. As shown in FIG. 3, a direction passing through the magnetic pole center in the radial direction R corresponds to a so-called d-axis. In addition, a direction passing through the middle in the radial direction R between limiting hole pairs 6 adjacent to each other in the circumferential direction C corresponds to a so-called q-axis. When a pair of magnetic flux limiting holes 4 is disposed so as to be symmetric with respect to a reference plane S, magnetic fluxes on the d-axis which is the direction of a magnetic pole P (the direction of a magnetic field) and on the q-axis orthogonal to the d-axis can appropriately pass through, resulting in a structure that facilitates effective use of magnet torque and reluctance torque.

In addition, the magnetic flux limiting hole 4 is a hole that extends toward the radially outer side R1 from a location closest to a corner of a permanent magnet 2 on an outer circumferential surface side of the rotor 20, with the permanent magnet 2 disposed in a member disposition hole 3. By the magnetic flux limiting holes 4 on the radially outer side R1, a phase in the circumferential direction C through which a magnetic flux passes can be appropriately made different between adjacent magnetic poles P, enabling to appropriately form a pseudo step-skew structure.

Meanwhile, it is preferred that a circumferential length CL of the shortest portion of a circumferential width of a magnetic path (so-called q-axis magnetic path) which is formed between limiting hole pairs 6 adjacent to each other in the circumferential direction C be the same between all limiting hole pairs 6. A minimum width for when a magnetic flux passes through between adjacent magnetic poles P is common for all magnetic poles P. Thus, a structure is obtained that facilitates effective use of reluctance torque in the entire circumferential direction C.

In addition, when taking a look at an edge portion on the radially outer side R1 of the rotor core 10, it is preferred that a circumferential width CW at an end portion on the radially outer side R1 of a magnetic path (q-axis magnetic path) which is formed between limiting hole pairs 6 adjacent to each other in the circumferential direction C be the same all the way in the axial direction L. By this, the circumferential width CW for when a magnetic flux passes through between adjacent magnetic poles P at the edge portion on the radially outer side R1 is common for all magnetic poles P. Thus, a structure is obtained that facilitates effective use of reluctance torque in the entire circumferential direction C.

### [Other embodiments]

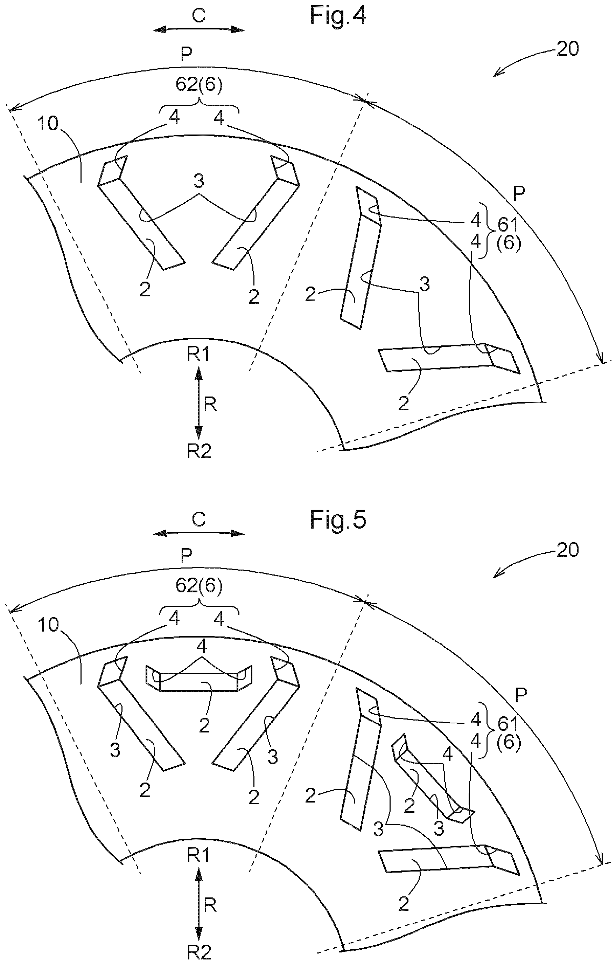

Other embodiments will be described below. Note that a configuration of each embodiment which will be described below is not limited to being applied alone and can also be applied in combination with a configuration of another embodiment as long as contradiction does not arise.
(1) In the above description, a mode is exemplified in which a single member disposition hole 3 in which a permanent magnet 2 is disposed and a pair of magnetic flux limiting holes 4 (limiting hole pair 6) are disposed so as to continue and form single space. However, the disposition of the member disposition hole 3 and the disposition of the pair of magnetic flux limiting holes 4 (limiting hole pair 6) are not limited to such an example. For example, as exemplified in FIG. 4, a plurality of member disposition holes 3 may be disposed for each magnetic pole P, and a magnetic flux limiting hole 4 may be disposed so as to continue from each member disposition hole 3. FIG. 4 exemplifies a mode in which a pair of member disposition holes 3 is disposed so as to be separated on both sides of a central portion in the circumferential direction C of each magnetic pole P. Magnetic flux limiting holes 4 (limiting hole pair 6) are made so as to extend toward the radially outer side R1 from each of the pair of member disposition holes 3. A first limiting hole pair 61 is made so as to extend toward the radially outer side R1 and extend toward an outer side in the circumferential direction C in each magnetic pole P. In addition, a second limiting hole pair 62 is made so as to extend toward the radially outer side R1 and extend toward an inner side in the circumferential direction C in each magnetic pole P.
   In addition, three or more member disposition holes 3 may be disposed in each magnetic pole P. For example, in a mode exemplified in FIG. 5, three member disposition holes 3 in total are disposed such that a pair of member disposition holes 3 is disposed so as to be separated on both sides of a central portion in the circumferential direction C of each magnetic pole P and one member disposition hole 3 is disposed in the circumferential direction C at the central portion of the magnetic pole P. In each member disposition hole 3, a magnetic flux limiting hole 4 is made so as to continue from the member disposition hole 3. Note, however, that magnetic flux limiting holes 4 that continue from a member disposition hole 3 disposed at a central portion of a magnetic pole P have the same shape in all magnetic poles P. For magnetic flux limiting holes 4 (limiting hole pairs 6) that continue from a pair of member disposition holes 3 disposed so as to be separated on both sides of a central portion in the circumferential direction C of each magnetic pole P, two types of limiting hole pairs, a first limiting hole pair 61 and a second limiting hole pair 62, are made. The first limiting hole pair 61 is made so as to extend toward the radially outer side R1 and extend toward the outer side in the circumferential direction C in each magnetic pole P. In addition, the second limiting hole pair 62 is made so as to extend toward the radially outer side R1 and extend toward the inner side in the circumferential direction C in each magnetic pole P.
   Note that the magnetic flux limiting holes 4 may be made independently instead of being made so as to continue from the member disposition holes 3.
(2) In the above description, a configuration in which a pair of magnetic flux limiting holes 4 provided for each magnetic pole P is disposed so as to be symmetric with respect to a reference plane S is described as an example. However, the disposition configuration of the pair of magnetic flux limiting holes 4 is not limited thereto, and a pair of magnetic flux limiting holes 4 provided for each magnetic pole P may be disposed so as to be asymmetric with respect to a reference plane S.

### [Summary of the embodiments]

A summary of a rotating electrical machine rotor core (10) described above will be briefly described below.

In one aspect, a rotating electrical machine rotor core (10) formed by stacking a plurality of magnetic plates (1) which are plate-like magnetic materials on top of each other includes: a member disposition hole (3) in which a permanent magnet (2) is disposed, the permanent magnet (2) being a source for generating magnetic force for rotating a rotor (20) according to a rotating magnetic field from a stator (80); and a pair of magnetic flux limiting holes (4) disposed for each of magnetic poles (P) so as to be disposed on both sides in a circumferential direction (C) of the magnetic pole (P) and to extend toward a radially outer side (R1) from a location closest to the member disposition hole (3), units in which the member disposition hole (3) is repeatedly made in a circumferential direction (C) being the magnetic poles (P), and in each of the magnetic plates (1), through parts of the magnetic plate (1) that make the magnetic flux limiting holes (4) are limiting-hole through parts (41), and a pair of the limiting-hole through parts (41) that makes a pair of the magnetic flux limiting holes (4) provided for each of the magnetic poles (P) is a through part pair (5), each of the magnetic plates (1) includes a plurality of types of the through part pairs (5 (51, 52)) having different circumferential spacings (CP) between a pair of the limiting-hole through parts (41), and types of the through part pairs (5) adjacent to each other in a circumferential direction (C) differ from each other, and the plurality of magnetic plates (1) are stacked on top of each other such that the member disposition holes (3) for each of the magnetic poles (P) continue all the way in an axial direction (L) and that the plurality of magnetic plates (1) have a plurality of axial regions (LR) having different phases in a circumferential direction (C) of the magnetic plates (1).

According to this configuration, by stacking the magnetic plates (1) on top of each other such that their phases differ from each other, i.e., by performing rotational stacking, the rotating electrical machine rotor core (10) can be implemented that has a pseudo step-skew structure in which in the axial regions (LR) divided in an axial direction of the rotor, the locations of the permanent magnets (2) are common but the locations of the magnetic flux limiting holes (4) differ from each other. Since the magnetic plates (1) can be of one type, an increase in the number of manufacturing apparatuses such as dies can be prevented. In addition, since formation of the magnetic plates (1) and stacking of the magnetic plates (1) can be performed in continuous processes, an increase in the number of manufacturing processes is also suppressed. As such, according to this configuration, the rotating electrical machine rotor core (10) can be implemented that can suppress an increase in the number of manufacturing processes and that has a magnetic structure that can reduce noise or vibration associated with rotation.

In addition, in one aspect, a rotating electrical machine rotor core (10) formed by stacking a plurality of magnetic plates (1) which are plate-like magnetic materials on top of each other includes: a member disposition hole (3) in which a permanent magnet (2) is disposed, the permanent magnet (2) being a source for generating magnetic force for rotating a rotor (20) according to a rotating magnetic field from a stator (80); and a pair of magnetic flux limiting holes (4) disposed for each of magnetic poles (P) so as to be disposed on both sides in a circumferential direction (C) of the magnetic pole (P) and to extend toward a radially outer side (R1) from a location closest to the member disposition hole (3), units in which the member disposition hole (3) is repeatedly made in a circumferential direction (C) being the magnetic poles (P), and in each of the magnetic plates (1), through parts of the magnetic plate (1) that make the magnetic flux limiting holes (4) are limiting-hole through parts (41), and a pair of the limiting-hole through parts (41) that makes a pair of the magnetic flux limiting holes (4) provided for each of the magnetic poles (P) is a through part pair (5), each of the magnetic plates (1) includes a plurality of types of the through part pairs (5 (51, 52)) having different circumferential spacings (CP) between a pair of the limiting-hole through parts (41), and types of the through part pairs (5) adjacent to each other in a circumferential direction (C) differ from each other, and the plurality of magnetic plates (1) may be stacked on top of each other such that the member disposition holes (3) for each of the magnetic poles (P) continue all the way in an axial direction (L) and that the plurality of magnetic plates (1) have a plurality of axial regions (LR) having different phases in a circumferential direction (C) of the magnetic plates (1) every disposition pitch in a circumferential direction (C) of the magnetic pole (P).

According to this configuration, by stacking the magnetic plates (1) on top of each other such that their phases differ from each other every disposition pitch in the circumferential direction (C) of the magnetic pole (P), i.e., by performing rotational stacking every disposition pitch in the circumferential direction (C) of the magnetic pole (P), the rotating electrical machine rotor core (10) can be implemented that has a pseudo step-skew structure in which in the axial regions (LR) divided in an axial direction of the rotor, the locations of the permanent magnets (2) are common but the locations of the magnetic flux limiting holes (4) differ from each other. Since the magnetic plates (1) can be of one type, an increase in the number of manufacturing apparatuses such as dies can be prevented. In addition, since formation of the magnetic plates (1) and stacking of the magnetic plates (1) can be performed in continuous processes, an increase in the number of manufacturing processes is also suppressed. As such, according to this configuration, the rotating electrical machine rotor core (10) can be implemented that can suppress an increase in the number of manufacturing processes and that has a magnetic structure that can reduce noise or vibration associated with rotation.

Here, it is preferred that a pair of the magnetic flux limiting holes (4) provided for each of the magnetic poles (P) be disposed so as to be symmetric with respect to a reference plane (S) that passes through a circumferential center of the magnetic pole (P) and extends in a radial direction (R).

According to this configuration, each magnetic pole (P) has a magnetically symmetrical structure with respect to its reference plane (S). Hence, magnetic fluxes on a d-axis which is the direction of the magnetic pole (P) and on a q-axis orthogonal to the d-axis can appropriately pass through, resulting in a structure that facilitates effective use of magnet torque and reluctance torque.

In addition, it is preferred that the magnetic flux limiting holes (4) each be a hole that extends toward a radially outer side (R1) from a location closest to a corner of the permanent magnet on an outer circumferential surface side of a rotor (20), with the permanent magnet disposed in the member disposition hole (3).

According to this configuration, by the magnetic flux limiting holes (4) on the radially outer side (R1), a phase in the circumferential direction (C) through which a magnetic flux passes can be appropriately made different between adjacent magnetic poles (P), enabling to appropriately form a pseudo step-skew structure.

In addition, it is preferred that pairs of the magnetic flux limiting holes (4) disposed for the respective magnetic poles (P) be limiting hole pairs (6 (61, 62)), and a circumferential length (CL (CL1, CL2)) of the shortest portion of a circumferential width of a magnetic path formed between the limiting hole pairs (6) adjacent to each other in a circumferential direction (C) be the same between all of the limiting hole pairs (6).

According to this configuration, a minimum width for when a magnetic flux passes through between adjacent magnetic poles (P) is common for all magnetic poles (P). Thus, a structure is obtained that facilitates effective use of reluctance torque in the entire circumferential direction (C).

In addition, it is preferred that each of the magnetic plates (1) include two types of through part pairs: a first through part pair (51) in which a spacing (CP) in a circumferential direction (C) between a pair of the limiting-hole through parts (41) that makes the through part pair (5) is a first spacing (CP1); and a second through part pair (52) in which a spacing (CP) in a circumferential direction (C) between a pair of the limiting-hole through parts (41) that makes the through part pair (5) is a second spacing (CP2) shorter than the first spacing (CP1), and the first through part pair (51) and the second through part pair (52) be alternately disposed in a circumferential direction (C).

Since the polarities of magnetic force for rotating the rotor (20) are of two types, the number of magnetic poles (P) is a multiple of 2. When two types of through part pairs (5) are alternately disposed in the circumferential direction (C), different types of through part pairs (5) can be appropriately disposed without through part pairs (5) of the same type being adjacent to each other.

In addition, it is preferred that pairs of the magnetic flux limiting holes (4) disposed for the respective magnetic poles (P) be limiting hole pairs (6 (61, 62)), and a circumferential width (CW) at an end portion on a radially outer side (R1) of a magnetic path formed between the limiting hole pairs (6) adjacent to each other in a circumferential direction (C) be the same all the way in an axial direction (L).

According to this configuration, at an edge portion on the radially outer side (R1), the circumferential width (CW) for when a magnetic flux passes through between adjacent magnetic poles (P) is common for all magnetic poles (P). Thus, a structure is obtained that facilitates effective use of reluctance torque in the entire circumferential direction (C).

### REFERENCE SIGNS LIST

1: Magnetic plate, 2: Permanent magnet, 3: Member disposition hole, 4: Magnetic flux limiting hole, 5: Limiting-hole through part pair (through part pair), 6: Limiting hole pair, 10: Rotor core, 20: Rotor, 41: Limiting-hole through part, 51: First limiting-hole through part pair (first through part pair), 52: Second limiting-hole through part pair (second through part pair), 61: First limiting hole pair, 62: Second limiting hole pair, 80: Stator, C: Circumferential direction, CP: Circumferential spacing (spacing in the circumferential direction between a pair of limiting-hole through parts), CP1: First spacing (first spacing), CP2: Second spacing (second spacing), CW: Circumferential width, L: Axial direction, LR: Axial region, P: Magnetic pole, R: Radial direction, R1: Radially outer side, and S: Reference plane

## Claims

1. A rotating electrical machine rotor core formed by stacking a plurality of magnetic plates on top of each other, the magnetic plates being plate-like magnetic materials, the rotating electrical machine rotor core comprising:
a member disposition hole in which a permanent magnet is disposed, the permanent magnet being a source for generating magnetic force for rotating a rotor according to a rotating magnetic field from a stator; and
a pair of magnetic flux limiting holes disposed for each of magnetic poles so as to be disposed on both circumferential sides of the magnetic pole and to extend toward a radially outer side from a location closest to the member disposition hole, units in which the member disposition hole is repeatedly made in a circumferential direction being the magnetic poles,
wherein
in each of the magnetic plates, through parts of the magnetic plate that make the magnetic flux limiting holes are limiting-hole through parts, and a pair of the limiting-hole through parts that makes a pair of the magnetic flux limiting holes provided for each of the magnetic poles is a through part pair,
each of the magnetic plates includes a plurality of types of the through part pairs having different circumferential spacings between a pair of the limiting-hole through parts, and types of the through part pairs adjacent to each other in a circumferential direction differ from each other, and
the plurality of magnetic plates are stacked on top of each other such that the member disposition holes for each of the magnetic poles continue all a way in an axial direction and that the plurality of magnetic plates have a plurality of axial regions having different phases in a circumferential direction of the magnetic plates.

2. A rotating electrical machine rotor core formed by stacking a plurality of magnetic plates on top of each other, the magnetic plates being plate-like magnetic materials, the rotating electrical machine rotor core comprising:
a member disposition hole in which a permanent magnet is disposed, the permanent magnet being a source for generating magnetic force for rotating a rotor according to a rotating magnetic field from a stator; and
a pair of magnetic flux limiting holes disposed for each of magnetic poles so as to be disposed on both circumferential sides of the magnetic pole and to extend toward a radially outer side from a location closest to the member disposition hole, units in which the member disposition hole is repeatedly made in a circumferential direction being the magnetic poles,
wherein
in each of the magnetic plates, through parts of the magnetic plate that make the magnetic flux limiting holes are limiting-hole through parts, and a pair of the limiting-hole through parts that makes a pair of the magnetic flux limiting holes provided for each of the magnetic poles is a through part pair,
each of the magnetic plates includes a plurality of types of the through part pairs having different circumferential spacings between a pair of the limiting-hole through parts, and types of the through part pairs adjacent to each other in a circumferential direction differ from each other, and
the plurality of magnetic plates are stacked on top of each other such that the member disposition holes for each of the magnetic poles continue all a way in an axial direction and that the plurality of magnetic plates have a plurality of axial regions having different phases in a circumferential direction of the magnetic plates every disposition pitch in a circumferential direction of the magnetic pole.

3. The rotating electrical machine rotor core according to claim 1 or 2, wherein a pair of the magnetic flux limiting holes provided for each of the magnetic poles is disposed so as to be symmetric with respect to a reference plane that passes through a circumferential center of the magnetic pole and extends in a radial direction.

4. The rotating electrical machine rotor core according to any one of claims 1 to 3, wherein the magnetic flux limiting holes each are a hole that extends toward a radially outer side from a location closest to a corner of the permanent magnet on an outer circumferential surface side of the rotor, with the permanent magnet disposed in the member disposition hole.

5. The rotating electrical machine rotor core according to any one of claims 1 to 4, wherein
pairs of the magnetic flux limiting holes disposed for the respective magnetic poles are limiting hole pairs, and
a circumferential length of a shortest portion of a circumferential width of a magnetic path formed between the limiting hole pairs adjacent to each other in a circumferential direction is same between all of the limiting hole pairs.

6. The rotating electrical machine rotor core according to any one of claims 1 to 5, wherein each of the magnetic plates includes two types of through part pairs: a first through part pair in which a spacing in a circumferential direction between a pair of the limiting-hole through parts that makes the through part pair is a first spacing; and a second through part pair in which a spacing in a circumferential direction between a pair of the limiting-hole through parts that makes the through part pair is a second spacing shorter than the first spacing, and the first through part pair and the second through part pair are alternately disposed in a circumferential direction.

7. The rotating electrical machine rotor core according to any one of claims 1 to 6, wherein
pairs of the magnetic flux limiting holes disposed for the respective magnetic poles are limiting hole pairs, and
a circumferential width at a radially outer side end portion of a magnetic path formed between the limiting hole pairs adjacent to each other in a circumferential direction is same all a way in an axial direction.
